# FASCICULE DE BREVET EUROPEEN

(11) **EP 2 792 899 B1**
(45) Date de publication et mention de la délivrance du brevet: **27.05.2020**
(21) Numéro de dépôt: 14164740.4
(22) Date de dépôt: 15.04.2014
(51) Int. Cl.: F16D 65/097, F16D 65/54, F16D 55/2265

(54) **FREIN À DISQUE ÉQUIPÉ DE MOYENS DE RAPPEL ÉLASTIQUE DES PATINS DE FREINAGE ET ÉQUIPÉ DE MOYENS DE RATTRAPAGE, PAR DÉFORMATION PLASTIQUE, DU JEU D'USURE DES PATINS**
SCHEIBENBREMSE, DIE MIT ELASTISCHEN RÜCKSTELLMITTELN DER BREMSBACKEN UND MIT MITTELN ZUM BESEITIGEN DES VERSCHLEISSSPIELS DER BREMSBACKEN DURCH PLASTISCHE VERFORMUNG AUSGESTATTET IST
DISC BRAKE EQUIPPED WITH ELASTIC RETURNING MEANS AND WITH PLASTIC DEFORMATION WEAR COMPENSATION MEANS FOR BRAKE PADS

(30) Priorité: 16.04.2013 FR 1353423
(43) Date de publication de la demande: 22.10.2014
(73) Titulaire: Chassis Brakes International B.V., 5656 AG Eindhoven (NL)
(72) Inventeur: Mahoudeaux, Roger, 93150 LE BLANC MESNIL (FR)
(74) Mandataire: Brevalex

(56) Documents cités:
- DE-A1- 4 115 635
- GB-A- 854 813
- GB-A- 2 166 822
- US-A1- 2011 168 503

## Description

### DOMAINE TECHNIQUE DE L'INVENTION

L'invention se rapporte à un frein à disque de véhicule automobile.

### ARRIERE PLAN TECHNIQUE DE L'INVENTION

L'invention se rapporte plus particulièrement à un frein à disque de véhicule automobile qui comporte :
- un disque de frein qui s'étend dans un plan transversal à un axe d'orientation axiale de rotation du disque ;
- un support fixe par rapport à un châssis du véhicule ;
- au moins un patin de freinage dont chacun comporte une garniture de friction dont une face transversale de friction coopère avec une piste de freinage associée du disque, le patin de freinage étant monté coulissant axialement dans le support entre une position avant active dans laquelle ladite face de friction est en appui contre la piste annulaire associée du disque, et une position arrière inactive dans laquelle ladite face de friction est espacée axialement de ladite piste annulaire associée du disque, d'un jeu déterminé de fonctionnement ;
- au moins un organe de rappel élastique du patin de freinage vers sa position inactive, qui est interposé entre le patin de freinage et le support, l'organe de rappel élastique étant fixé au support par l'intermédiaire de moyens de rattrapage d'un jeu d'usure de la garniture de friction du patin de freinage qui se déforment plastiquement lorsque la course du patin de freinage jusqu'à sa position active est supérieure audit jeu déterminé de fonctionnement, et l'organe de rappel élastique comportant une lame comportant au moins un premier tronçon d'orientation axiale qui est déformable élastiquement par traction entre un état de repos et un état d'élongation maximale dont la valeur est égale au jeu déterminé de fonctionnement,
- cette lame comportant une première extrémité arrière fixe qui est immobilisée en butée axiale vers l'avant sur le support, et une deuxième extrémité avant mobile qui est accrochée au patin de freinage pour être poussée par le patin de freinage lors de son coulissement vers sa position active de manière à déformer élastiquement le premier tronçon déformable élastiquement.

Dans un frein à disque connu de l'état de la technique, le coulissement des patins de freinage vers leur position active est commandé par un piston. Les deux patins de freinage pincent alors fortement le disque pour ralentir sa rotation. L'opération de freinage est ainsi une opération active.

Les patins de freinage sont repoussés vers leur position inactive par le disque en rotation. Il s'agit donc d'une opération passive.

Il arrive cependant que le disque ne repousse pas les patins de freinage avec suffisamment de force pour les écarter à distance du disque. Ceci peut par exemple arriver lorsque le coulissement des patins de freinage est de qualité insuffisante, voire grippé.

Bien que les patins de freinage ne soient plus serrés activement contre le disque, ce dernier frotte néanmoins en permanence contre la garniture de friction portée par chaque patin de freinage. Les garnitures de friction subissent ainsi une usure non fonctionnelle prématurée.

De plus, ce frottement permanent est susceptible de provoquer un échauffement dommageable pour certains organes du frein à disque.

Ce frottement permanent provoque aussi l'apparition d'un couple résiduel qui s'oppose à la rotation du disque. Ceci augmente la consommation du véhicule, tout en diminuant les performances du moteur.

Le document US-A1-2011/168.503 divulgue un organe de rappel élastique qui présente un tronçon qui est déformable à la fois élastiquement et plastiquement. Cependant, cet agencement est difficile à mettre en œuvre pour garantir un jeu de fonctionnement constant quel que soit l'usure du patin.

### BREF RESUME DE L'INVENTION

Pour résoudre ces problèmes d'usure et d'échauffement, l'invention propose un frein à disque du type décrit précédemment, caractérisé en ce que la lame (50) comporte au moins un deuxième tronçon (62) déformable plastiquement, sous l'effet d'un effort de traction axiale, formant lesdits moyens de rattrapage du jeu (J2) d'usure, ce deuxième tronçon (62) déformable plastiquement étant conformé pour être allongé plastiquement lorsque la course du patin de freinage (18) jusqu'à sa position active est supérieure audit jeu (J1) déterminé de fonctionnement.

Selon d'autres caractéristiques de l'invention :
- l'élasticité du deuxième tronçon déformable plastiquement est inférieure à l'élasticité du premier tronçon déformable élastiquement entre son état de repos et son état d'élongation maximale, la limite d'élasticité d'au moins une portion du deuxième tronçon déformable plastiquement étant inférieure à la limite d'élasticité du tronçon premier déformable élastiquement dans son état d'élongation maximale ;
- le deuxième tronçon déformable plastiquement est formé par un pliage en accordéon d'un tronçon de la lame ;
- le premier tronçon déformable élastiquement présente une forme incurvée ;
- le deuxième tronçon déformable plastiquement est agencé axialement en arrière du premier tronçon déformable élastiquement ;
- le deuxième tronçon déformable plastiquement est agencé axialement en arrière du patin de freinage ;
- l'extrémité axiale arrière fixe de la lame est portée par des moyens de fixation par insertion axiale dans une encoche axiale du support ;
- les moyens de fixation sont formés par une languette qui s'étend parallèlement à la lame de manière à former une épingle à cheveux ;
- l'encoche présente une section en forme de queue d'aronde, et la languette comporte une patte d'expansion élastique qui est montée contrainte élastiquement de manière transversale dans l'encoche de manière à immobiliser le coulissement de la languette par frottement ;
- ledit au moins un patin de freinage comporte au moins une oreille latérale de guidage en coulissement qui est reçue dans une coulisse axiale du support, et l'encoche de fixation de la lame est formée dans un fond de la coulisse, l'extrémité avant mobile de la lame étant sollicitée par l'oreille latérale associée du patin de freinage ;
- le patin de freinage comporte au moins une oreille latérale de guidage en coulissement qui est reçue dans une coulisse axiale du support ;
- l'encoche de fixation de la lame est formée par la coulisse, l'extrémité avant mobile de la lame étant sollicitée par l'oreille latérale associée du patin de freinage ;
- les moyens de fixation sont formés par une glissière qui épouse les parois de la coulisse et qui est fixée au support ;
- les moyens de fixation portent une butée qui est en contact avec une face arrière du support pour bloquer le coulissement axial vers l'avant de la lame ;
- la lame et les moyens de fixation sont réalisés en une seule pièce venue de matière, notamment par découpe et pliage d'une tôle.

### BREVE DESCRIPTION DES FIGURES

D'autres caractéristiques et avantages de l'invention apparaitront à la lecture de la description détaillée qui va suivre pour la compréhension de laquelle on se reportera aux dessins annexés dans lesquels :
- la figure 1 est une vue en perspective éclatée qui représente un frein à disque réalisé selon un premier mode de réalisation de l'invention ;
- la figure 2 est une vue de face qui représente le support fixe du frein à disque de la figure 1 muni d'encoches pour recevoir des moyens, de rappel élastique du patin de freinage associé dans sa position inactive, qui sont réalisés selon le premier mode de réalisation de l'invention ;
- la figure 3 est une vue de détail en perspective qui représente les moyens de rappel élastique du patin de freinage réalisés selon le premier mode de réalisation de l'invention ;
- la figure 4 est une vue de détail à plus grande échelle en perspective qui représente une encoche du support dans laquelle sont reçus les moyens de rappel élastique réalisés selon le premier mode de réalisation ;
- la figure 5 est une vue de dessus qui représente la butée des moyens de rappel élastique sur le support selon le premier mode de réalisation de l'invention ;
- la figure 6 est une vue similaire à celle de la figure 3 qui représente les moyens de rappel du patin de freinage réalisés selon un deuxième mode de réalisation de l'invention ;
- la figure 7A est une vue, schématique en section selon un plan horizontal passant par les oreilles latérales du patin de freinage qui représente les moyens de rappel élastique et le patin de freinage écarté du disque de friction d'une distance supérieure au jeu de fonctionnement ;
- la figure 7B est une vue similaire à celle de la figure 7A qui représente le patin de freinage écarté du disque de friction d'un jeu d'usure après avoir parcouru le jeu de fonctionnement en tendant les moyens de rappel élastique par rapport à sa position illustrée à la figure 7A ;
- la figure 7C est une vue similaire à celle de la figure 7A qui représente le patin de freinage dans une position active serré contre le disque après déformation plastique des moyens de rattrapage du jeu par rapport à la figure 7B ;
- la figure 7D est une vue similaire à celle de la figure 7A dans laquelle, par rapport à la figure 7C, le patin de freinage a été rappelé dans sa position inactive par les moyens de rappel élastique.

### DESCRIPTION DETAILLEEE DES FIGURES

Dans la suite de la description, des éléments présentant une structure identique ou des fonctions analogues seront désignés par des mêmes références.

Dans la suite de la description, on adoptera à titre non limitatif et sans référence à la gravité terrestre, des orientations axiales, verticales et transversales indiquées par le trièdre "A,V,T" des figures.

L'orientation axiale "A" est dirigée d'arrière en avant, parallèlement à l'axe "B" de rotation du disque 12.

On définit le plan horizontal comme étant un plan axial transversal.

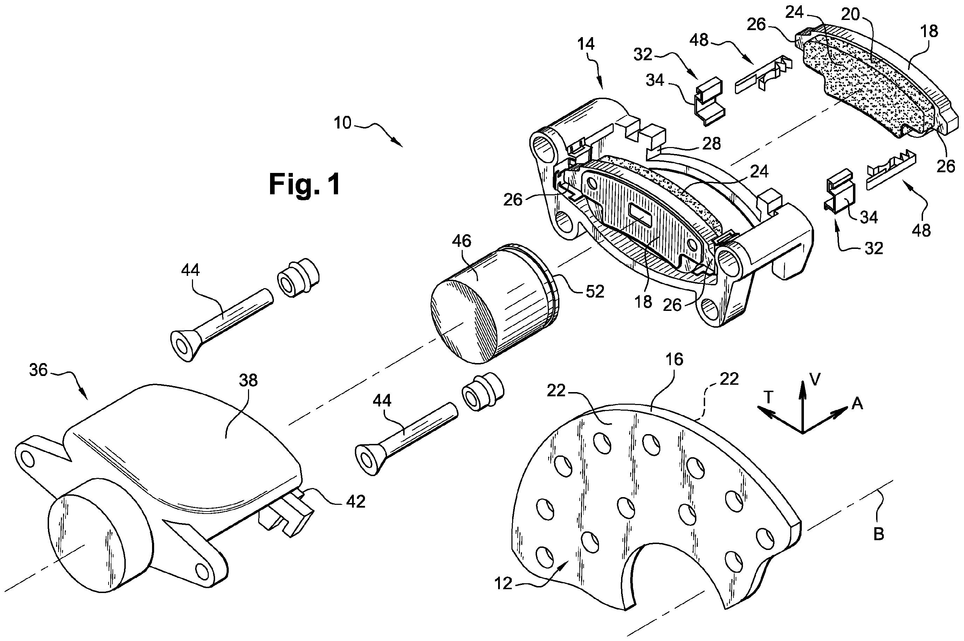

On a représenté à la figure 1 un frein à disque 10 de véhicule automobile. Il s'agit ici d'un frein à disque 10 dit à "étrier flottant" ou « étrier coulissant ».

De manière connue, le frein à disque comporte un disque 12 qui est monté tournant autour d'un axe "B" d'orientation axiale. Le disque 12 est solidaire en rotation avec une roue (non représentée) du véhicule automobile.

Le frein à disque 10 comporte un support 14, aussi appelé chape, qui est monté fixe par rapport au châssis (non représenté) du véhicule. Le support fixe 14 chevauche un bord périphérique 16 du disque 12.

Deux patins de freinage opposés 18, avant et arrière, sont montés coulissant axialement dans le support 14 de part et d'autre du disque 12. Les deux patins de freinage 18 présentent une structure et un agencement sur le support 14 qui sont identiques par symétrie par rapport à un plan transversal vertical médian. On ne décrira par la suite que le patin de freinage 18 arrière, la description étant applicable au patin de freinage 18 avant en inversant les directions avant et arrière.

Le patin de freinage 18 se présente sous la forme d'une plaque support transversale verticale. Le patin de freinage 18 présente une face 20 avant, qui est orientée vers une face 22 arrière en vis à vis du disque 12 qui est en forme d'une piste annulaire, qui porte une garniture 24 de friction dont une face 25 transversale et verticale avant de friction est apte à coopérer avec la face 22 du disque 12.

Chacune des extrémités transversales opposées du patin de freinage 18 comporte une oreille latérale 26 qui est montée coulissante, avec jeu, dans une coulisse 28 associée de la chape 14. Chaque coulisse 28 est d'orientation axiale et présente une forme de "C" ouvert transversalement vers l'oreille latérale associée 26 du patin de freinage 18. La coulisse 28 est délimitée transversalement par un fond 30 opposé à l'ouverture et d'orientation globalement verticale.

Dans l'exemple représenté aux figures, une glissière 32 est interposée transversalement entre chaque oreille latérale 26 et la coulisse 28 associée.

Chaque glissière 32 est formée par un ressort à lame de section en "C" qui épouse les parois de la coulisse 28 associée. La glissière 32 comporte ainsi un fond 34 d'orientation verticale et axiale qui est agencé contre le fond 30 de la coulisse 28.

La glissière 32 permet un degré déterminé de mouvement du patin de freinage 18 dans le support 14, c'est-à-dire, généralement mais de manière non limitative, un mouvement de coulissement transversal accompagnant la rotation du disque 12.

Le patin de freinage 18 est ainsi monté coulissant selon une direction axiale, parallèle à l'axe de rotation du disque, dans le support 14 sur une course de fonctionnement entre :
- une position avant active dans laquelle la face 25 transversale avant de friction de la garniture 24 de friction est en appui contre la face 22 en vis à vis du disque 12 ; et
- une position arrière inactive dans laquelle la face 25 transversale avant de friction de la garniture 24 de friction du patin de freinage 18 est écartée axialement d'un jeu "J1" déterminé de fonctionnement par rapport à la face associée 22 du disque 12.

Lors d'une opération de freinage, le serrage des patins de freinage 18, depuis leur position inactive jusqu'à leur position active, est commandé par un étrier de frein 36 du frein à disque 10.

De manière connue, l'étrier 36 comporte une voûte 38 qui s'étend axialement au-dessus du support 14 en le recouvrant et deux ailes arrière 40 et avant 42 qui s'étendent radialement depuis des bords d'extrémité arrière et avant de la voûte 38 vers l'axe "B".

L'aile avant 42 s'étend en regard du patin de freinage 18 avant, et l'aile arrière 40 s'étend en regard du patin de freinage 18 arrière.

L'étrier 36 est ici monté coulissant axialement par rapport au support fixe 14 par l'intermédiaire de deux colonnettes parallèles 44 de guidage dont chacune est reçue en coulissement dans un alésage axial associé du support fixe 14.

De manière connue, l'aile arrière 40 de l'étrier 36 porte au moins un piston 46 axial dont une face transversale d'appui est susceptible, lors d'une opération de freinage, de coopérer avec la face transversale en vis à vis du patin de freinage 18 arrière pour le solliciter axialement vers l'avant, pour exercer un effort axial de serrage de la face transversale avant de friction 25 de la garniture 24 de friction en appui contre la face 22 en vis à vis du disque 12.

Par réaction, l'étrier 36 coulisse axialement vers l'arrière et, de manière symétrique, l'aile avant 42 sollicite le patin de freinage 18 avant pour serrer la face transversale arrière de friction 25 de la garniture 24 de friction du patin de freinage 18 avant en appui contre la face 22 avant en vis à vis du disque 12.

Lorsque, à l'issue de l'opération de freinage, le piston 46 cesse de solliciter le patin de freinage 18 arrière, le retour des patins de freinage 18, depuis leur position active vers leur position inactive, est généralement provoqué par la rotation du disque 12 qui « repousse » chaque patin de freinage 18 vers sa position inactive.

Néanmoins, dans certains cas, on a constaté que la force de répulsion exercée par le disque 12 est insuffisante pour repousser les patins de freinage 18 jusqu'à leur position inactive. La garniture 24 de friction des patins de freinage 18 continue alors de frotter contre le disque 12, alors qu'aucune action de serrage des garnitures de friction des patins de freinage par l'étrier 36 n'est commandée.

Pour garantir que chaque patin de freinage 18 revient dans sa position inactive à l'issue d'une opération de freinage, le frein à disque 10 est équipé de moyens de rappel élastique du patin de freinage 18 vers sa position inactive. Ces moyens de rappel élastique sont interposés entre le patin de freinage 18 et le support fixe 14.

Le frein à disque 10 comporte ici quatre organes de rappel élastique 48, aussi appelés ressorts de rappel, dont chacun est agencé entre le support 14 et une oreille latérale associée 26 d'un patin de freinage 18.

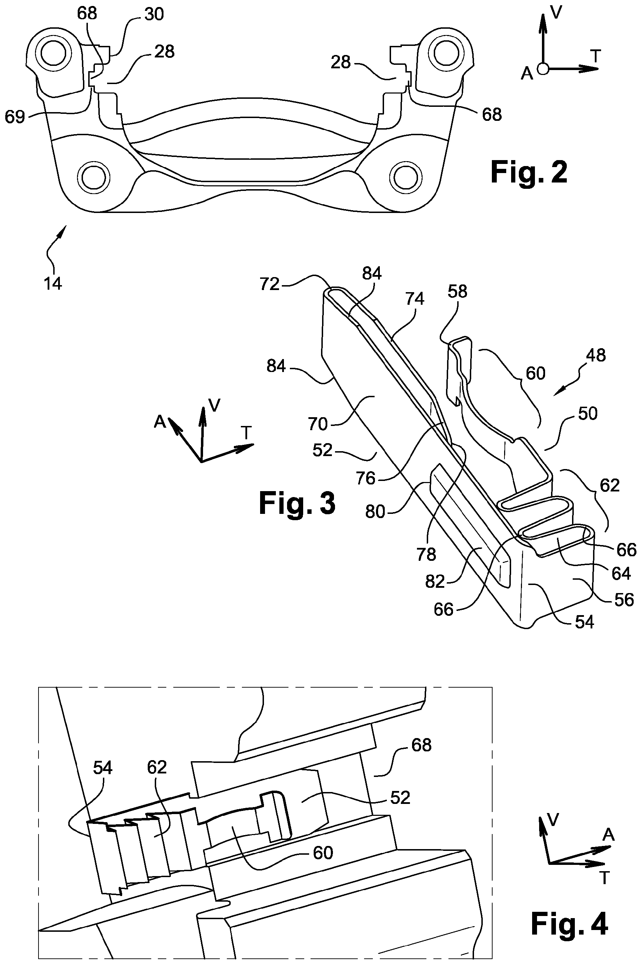

Un premier mode de réalisation d'un l'organe de rappel 48 selon l'invention est représenté aux figures 3 à 5.

Les quatre organes de rappel 48 sont tous identiques et ils sont agencés de la même manière sur le support 14. Un seul de ces organes de rappel 48 du patin de freinage 18 arrière sera donc décrit par la suite en détails.

L'organe de rappel 48 élastique se présente sous la forme d'une bande métallique, par exemple en acier, dont la largeur s'étend verticalement et qui est repliée en forme d'épingle à cheveux en définissant deux branches axiales parallèles qui s'étendent chacune axialement depuis un coude 54 d'extrémité arrière commun jusqu'à une extrémité libre associée.

La première branche est formée par une lame 50 et la deuxième branche est formée par une languette 52.

Le coude 54 est réalisé de manière à réserver un espace transversalement entre la lame 50 et la languette 52.

La lame 50, formant la première branche, comporte une première extrémité, arrière, 56 fixe qui est raccordée au coude 54 de l'organe de rappel 48. Cette extrémité arrière 56 fixe est immobilisée en butée axiale vers l'avant sur le support 14 par des moyens qui seront détaillés par la suite.

La lame 50 comporte une deuxième extrémité avant 58 libre mobile qui comporte des moyens d'accrochage au patin de freinage 18 associé.

L'extrémité avant 58 de la lame 50 est repliée transversalement dans une direction opposée à la languette 52 pour former un rebord qui est destiné à être agencé au contact d'une face avant de l'oreille latérale 26 associée du patin de freinage 18.

La lame 50 comporte au moins un tronçon 60 d'orientation axiale qui est déformable élastiquement par traction formant les moyens de rappel élastique du patin de freinage 18 associé. Le tronçon 60 déformable élastiquement forme ici un tronçon d'extrémité avant 58 de la lame 50. L'élasticité en traction est conférée par une forme légèrement incurvée du tronçon 60 déformable élastiquement.

La face convexe de la courbure du tronçon 60 déformable élastiquement est orientée vers la languette 52 de l'organe de rappel 48 afin de ne pas entrer en collision avec le patin de freinage 18 lors de son coulissement.

Le patin de freinage 18 est ainsi susceptible de pousser l'extrémité avant 58 mobile de la lame 50 vers l'avant lors de son coulissement vers sa position active en déformant élastiquement en traction le tronçon 60 déformable élastiquement.

Au fur et à mesure de leur utilisation, chaque patin de freinage 18 subit un phénomène d'usure de la garniture de friction 24 qui se traduit par la diminution progressive de l'épaisseur axiale de la garniture 24 de friction.

Si cette usure n'était pas prise en compte, le patin de freinage 18 serait rappelé par la lame 50 jusqu'à une position inactive fixe ou constante par rapport au support 14.

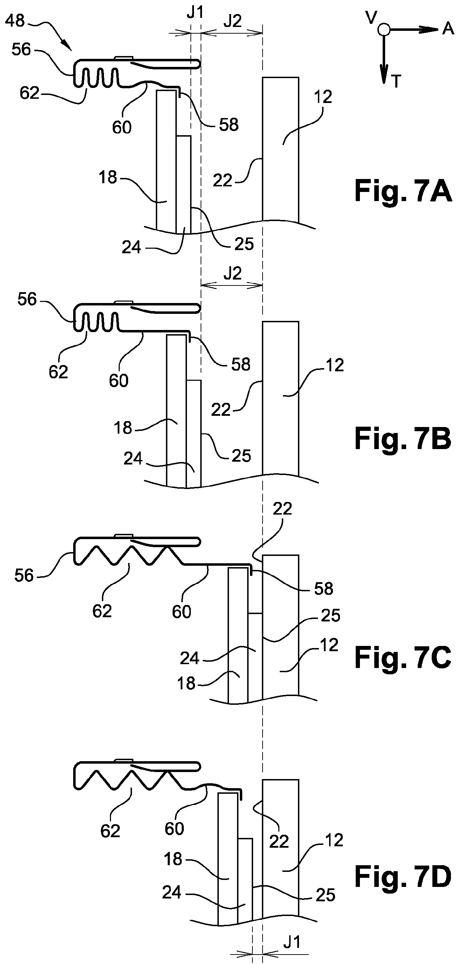

Par conséquent, lors de sa course de fonctionnement, le patin de freinage 18, entre sa position inactive et sa position active, devrait parcourir le jeu "J1" déterminé de fonctionnement augmenté d'un jeu "J2" d'usure supplémentaire, comme illustré à la figure 7A. Or, il est connu que l'effort de rappel élastique du ressort est proportionnel à sa longueur d'élongation.

Afin d'éviter que l'effort de serrage nécessaire pour faire coulisser le patin de freinage 18 jusqu'à sa position active n'augmente excessivement avec l'usure de la garniture 24 de friction, il prévu que les moyens de rappel élastique sont fixés au support 14 par l'intermédiaire de moyens de rattrapage du jeu "J2" d'usure des patins de freinage 18 qui se déforment plastiquement lorsque la course de fonctionnement excède le jeu "J1" déterminé de fonctionnement.

A cet effet, la courbure du tronçon 60 déformable élastiquement est déterminée pour permettre une élongation maximale du tronçon 60 déformable élastiquement, entre son état de repos et son état d'élongation maximale, qui est égale au jeu "J1" déterminé de fonctionnement.

Dans son état d'élongation maximale, le tronçon 60 déformable élastiquement ne présente plus de courbure, ou quasiment plus de courbure, et son élasticité à la traction diminue très nettement.

En outre, la lame 50 comporte au moins un tronçon 62 déformable plastiquement en traction axiale constituant les moyens de rattrapage du jeu "J2" d'usure.

Le tronçon 62 déformable plastiquement est situé entre le tronçon 60 déformable élastiquement et le coude 54 de l'organe de rappel 48.

Le tronçon 62 déformable plastiquement est ainsi agencé axialement en arrière du tronçon 60 déformable élastiquement.

Le tronçon 62 déformable plastiquement est conformé pour être déformé et allongé plastiquement lorsque la course de fonctionnement du patin de freinage 18 excède le jeu "J1" déterminé de fonctionnement. Pour ce faire, la limite d'élasticité d'au moins une portion du tronçon 62 déformable plastiquement est inférieure à la limite d'élasticité du tronçon 60 déformable élastiquement dans son état d'élongation maximale.

Dans l'exemple représenté aux figures, le tronçon 62 déformable plastiquement est formé par des brins 64 en accordéon de cette partie de la lame 50 qui sont reliés et articulés entre eux par des plis 66.

Pour que l'organe de rappel 48 soit compact, les brins 64 en accordéon sont agencés dans l'espace délimité transversalement entre les deux branches 50, 52 de l'organe de rappel 48.

Ainsi, la succession des plis 66 situés à droite à la figure 3 est alignée axialement avec l'extrémité avant 58 mobile du tronçon 60 déformable élastiquement.

Le tronçon 62 déformable plastiquement présente une élasticité inférieure à celle du tronçon 60 déformable élastiquement tant que la course du patin de freinage 18 vers sa position active n'excède pas le jeu "J1" déterminé de fonctionnement.

En revanche, lorsque la course du patin de freinage 18 vers sa position active excède le jeu "J1" déterminé de fonctionnement, le tronçon 60 déformable élastiquement, qui est alors tendu, transmet la totalité de l'effort de serrage du piston au tronçon 62 déformable plastiquement. L'effort de serrage ainsi transmis est supérieur à la limite d'élasticité des plis 66 du tronçon 62 déformable plastiquement, ce qui entraîne leur déformation plastique, c'est à dire leur déformation permanente.

Le tronçon 62 déformable plastiquement permet ainsi de modifier la position inactive du patin de freinage 18 en la déplaçant axialement vers le disque 12 au fur et à mesure de l'usure de la garniture 24 de friction.

La languette 52, constituant la deuxième branche de l'organe de rappel élastique 48, forme les moyens de fixation par insertion axiale dans une encoche 68 axiale du support 14. L'encoche 68 débouche axialement vers l'arrière dans une face 69 verticale transversale arrière du support 14.

Comme représenté aux figures 2 et 4, l'encoche 68 axiale est agencée dans le support 14, à proximité de la coulisse 28. Dans l'exemple représenté aux figures, l'encoche 68 est réalisée dans le fond 30 vertical axial de la coulisse 28.

De manière non limitative, l'encoche 68 est ici ouverte transversalement pour déboucher dans la coulisse 28 de manière à former une rainure.

L'encoche 68 présente une section transversale en forme de queue d'aronde afin de permettre une immobilisation verticale de l'organe de rappel 48 comme cela sera décrit plus en détails par la suite.

En se reportant à nouveau à la figure 3, la deuxième branche 52 de l'organe forme une languette 52 formant moyens de fixation.

La languette 52 comporte un corps 70 qui s'étend axialement depuis le coude 54 jusqu'à une extrémité avant.

Une patte 74 d'expansion élastique prolonge l'extrémité avant du corps 70. Cette patte 74 d'expansion est rabattue en arrière contre le corps 70, en formant un pli avant formant une charnière 72 à l'extrémité avant de la languette 52.

Dans l'exemple représenté à la figure 3, la patte 74 d'expansion est située transversalement entre la lame 50 et le corps 70 de la languette 52. Du fait du rayon de courbure de la charnière 72, la patte 74 d'expansion est légèrement écartée transversalement du corps 70 de la languette 52.

Un tronçon 76 d'extrémité arrière libre de la patte 74 d'expansion, qui présente une longueur axiale supérieure à l'écartement entre le corps 70 de la languette 52 et la patte 74, est pliée en direction du corps 70 de manière que son extrémité 78 arrière libre soit en contact avec le corps 70.

Le corps 70 de la languette 52 comporte en outre une butée 80 verticale transversale qui est destinée à être en contact axial avec la face 69 arrière du support 14 pour bloquer le coulissement axial vers l'avant du corps 70, et donc de la lame 50.

Plus particulièrement, la butée 80 est ici formée par la face avant d'un bossage 82 réalisé, par exemple par emboutissage, dans le corps 70 de la languette 52.

Le bossage 82 fait saillie transversalement dans la face du corps 70 qui est opposée à la lame 50. Le bossage 82 présente une forme allongée axialement.

Pour améliorer la qualité de l'appui de la butée 80 contre le support 14, le corps 70 de la languette 52 est « crevé » au droit de l'avant du bossage 82, avant ou pendant l'emboutissage. La butée 80 est ainsi formée par l'épaisseur du matériau qui s'étend dans un plan vertical transversal.

La butée 80 est agencée axialement en avant du tronçon 62 déformable plastiquement. Ainsi, le coude 54 et le tronçon 60 déformable élastiquement sont agencés en arrière de la face 69 arrière du support 14.

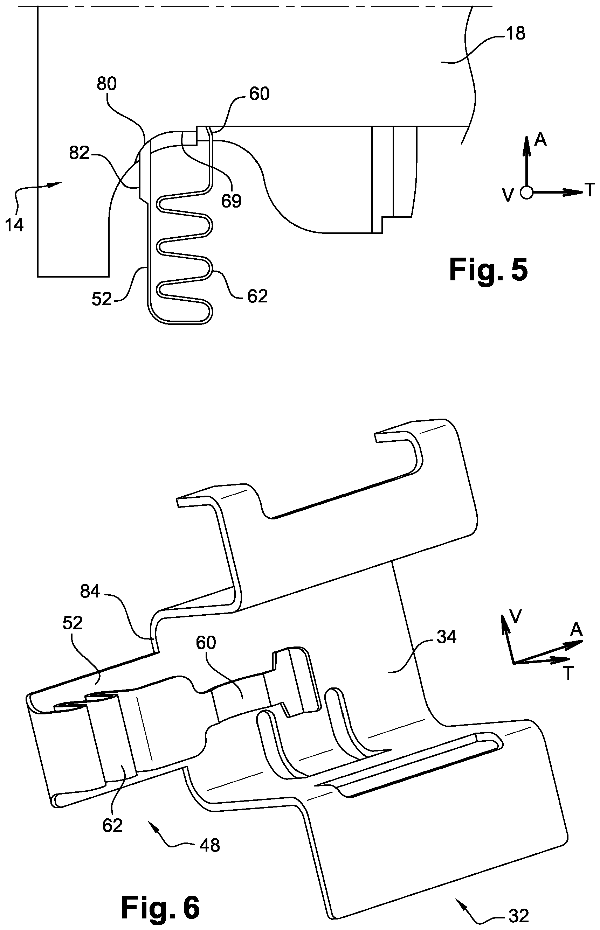

Comme représenté aux figures 4 et 5, la languette 52 est insérée axialement, par sa charnière 72 d'extrémité avant, dans l'encoche 68 du support 14.

Du fait de sa forme en épingle à cheveux, l'organe de rappel 48 chevauche le fond 34 vertical de la glissière 32.

Pour faciliter son insertion dans l'encoche 68, un tronçon d'extrémité avant de la languette 52 est biseauté et il présente deux chanfreins 84 pour en diminuer progressivement la largeur verticale.

La patte 74 d'expansion est montée contrainte élastiquement selon une direction transversale dans l'encoche 68. Du fait de la forme en queue d'aronde de l'encoche 68, le retrait axial de la languette 52 est freiné par frottement.

De plus, la forme en queue d'aronde de l'encoche 68 permet de centrer verticalement l'organe de rappel 48 par rapport à la coulisse 28.

L'élasticité nécessaire à l'expansion de la patte 74 est ici fournie d'une part par la charnière 72 et, d'autre part, par le tronçon d'extrémité arrière plié de la patte 74. Ceci permet de garantir que le corps 70 de la languette 52 est en appui transversalement dans le fond de l'encoche 68.

La butée 80 permet ainsi de limiter le coulissement de l'organe 48 de rappel axialement vers l'avant, tandis que la patte 74 d'expansion permet de freiner les mouvements de l'organe 48 de rappel axialement vers l'arrière, verticalement dans les deux sens et transversalement dans les deux sens.

L'organe 48 de rappel selon le premier mode de réalisation est avantageusement réalisé en une seule pièce par découpe, pliage et emboutissage d'une bande de tôle métallique.

Selon le premier mode de réalisation, les organes de rappel 48 présentent une structure parfaitement identique pour les deux oreilles latérales opposées 26 d'un patin de freinage 18. Il est ainsi possible de produire en série un modèle unique d'organe de rappel 48 sans se soucier de leur emplacement de destination, à gauche ou à droite du patin de freinage 18.

On a représenté à la figure 6, un deuxième mode de réalisation de l'organe de rappel 48. Seuls les moyens de fixation de l'organe de rappel 48 diffèrent par rapport à l'organe de rappel 48 selon le premier mode de réalisation. On ne décrira par la suite que les parties structurelles qui diffèrent du premier mode de réalisation.

L'organe de rappel 48 et la glissière 32 sont ici réalisés en une seule pièce. La fonction de fixation de l'organe de rappel 48 sur le support 14 est ici réalisée par la glissière 32.

La languette 52 de l'organe de rappel 48 est raccourcie par rapport au premier mode de réalisation et elle ne comporte plus de patte 74 d'expansion.

Cette conception permet en outre de ne pas réaliser d'encoche 68 dans le support 14. L'organe 48 de rappel est ici dans la coulisse 28 directement par l'intermédiaire de la glissière 32.

La languette 52 s'étend depuis le coude 54 d'extrémité arrière jusqu'à un bord 84 vertical d'extrémité arrière du fond de la glissière 32. Le bord 84 de raccordement entre la languette 52 et la glissière 32 est agencé axialement entre le tronçon 60 déformable élastiquement et le tronçon 62 déformable plastiquement.

A l'issue du montage de la glissière 32 sur le support 14, le tronçon 62 déformable plastiquement fait saillie axialement vers l'arrière par rapport au support 14, comme dans le premier mode de réalisation.

Dans ce deuxième mode de réalisation, il n'est pas nécessaire de prévoir une butée axiale sur la languette 52 car la glissière 32 est elle-même immobilisée axialement par rapport au support 14.

L'organe 48 de rappel et la glissière 32 sont avantageusement réalisés en une seule pièce par découpe et pliage d'une tôle métallique.

Ce deuxième mode de réalisation permet de diminuer le nombre de pièces constituant le frein à disque 10.

Néanmoins, les glissières 32 présentent une structure différente selon leur emplacement de destination, à gauche ou à droite du patin de freinage 18.

La glissière 32 de gauche présente une symétrie en miroir par rapport à la glissière 32 de droite. Il faut donc produire deux organes de rappel 48 différents en fonction de leur emplacement de destination.

On décrira à présent le fonctionnement de l'organe de rappel 48 réalisé selon l'un quelconque des modes de réalisation de l'invention en références aux figures 7A à 7D.

On a représenté à la figure 7A le patin de freinage 18 dans une position inactive avec une usure prononcée de la garniture 24 de friction. Le patin de freinage 18 est ainsi agencé axialement en arrière du disque 12 et la face transversale avant de friction 25 de la garniture de friction 24 est à une distance égale à la somme :
- du jeu "J1" déterminé de fonctionnement ; et
- d'un jeu "J2" d'usure.

Pour les besoins de la description, les jeux "J1, J2" ont été exagérés aux figures.

Le tronçon 60 déformable élastiquement est alors dans son état de repos.

Lorsque le patin de freinage 18 est sollicité vers sa position active par le piston 46, il parcourt tout d'abord le trajet correspondant au le jeu "J1" déterminé de fonctionnement, comme représenté à la figure 7B.

Lors de cette première partie de la course, l'oreille latérale 26 du patin de freinage 18 appuie contre l'extrémité avant 58 mobile de la lame 50 de manière à tendre le tronçon 60 déformable élastiquement entre l'extrémité arrière 56 fixe et l'extrémité avant 58 mobile.

Le tronçon 60 déformable élastiquement atteint alors son état d'élongation maximale.

Du fait de la différence d'élasticité entre le tronçon 60 déformable élastiquement et le tronçon 62 déformable plastiquement, le tronçon 62 déformable plastiquement ne subit sensiblement pas de déformation élastique.

La face transversale avant de la garniture de friction 24 du patin de freinage 18 est toujours écartée, par rapport à la face ou piste annulaire associée du disque 12, d'une distance égale au jeu "J2" d'usure. Le patin de freinage 18 poursuit donc sa course jusqu'à sa position active représentée à la figure 7C.

Lors de cette deuxième partie de course, le tronçon 60 déformable élastiquement ne pouvant plus se déformer, l'effort de serrage est transmis aux plis 66 du tronçon 62 déformable plastiquement.

Le tronçon 62 déformable plastiquement subit ainsi une traction qui tend à écarter axialement les brins 64 les uns des autres. Les plis 66 sont alors déformés plastiquement, la déformation élastique du tronçon 62 déformable plastiquement étant négligeable par rapport à sa déformation plastique.

Lorsque l'opération de freinage prend fin, le patin de freinage 18 est rappelé vers sa position inactive par le tronçon 60 déformable élastiquement qui reprend son état de repos, comme illustré à la figure 7D.

Le patin de freinage 18 est ainsi écarté du disque 12 d'une distance égale au seul jeu "J1" déterminé de fonctionnement ; le jeu "J2" d'usure ayant été absorbé par la déformation plastique du tronçon 62 déformable plastiquement.

L'organe de rappel 48 réalisé selon l'un des modes de réalisation de l'invention permet ainsi de garantir que le patin de freinage 18 est rappelé dans sa position inactive.

De plus, l'agencement d'un tronçon 62 déformable plastiquement permet d'éviter que l'effort de serrage à exercer par le piston 46 pour actionner le patin de freinage 18 vers sa position active ne devienne trop élevé.

En outre, en conservant un jeu "J1" de fonctionnement constant entre le patin de freinage 18 en position inactive et le disque, le temps de réponse du système de freinage demeure constant indépendamment de l'usure de la garniture 24 de friction.

## Revendications

1. Frein à disque (10) de véhicule automobile qui comporte :
- un disque (12) de frein qui s'étend dans un plan transversal à un axe (A) d'orientation axiale de rotation du disque ;
- un support (14) fixe par rapport à un châssis du véhicule ;
- au moins un patin de freinage (18) dont chacun comporte une garniture (24) de friction dont une face transversale de friction (25) coopère avec une piste de freinage (22) associée du disque (12), le patin de freinage (18) étant monté coulissant axialement dans le support (14) entre une position avant active dans laquelle ladite face (25) de friction est en appui contre la piste annulaire associée du disque (12), et une position arrière inactive dans laquelle ladite face (25) de friction est espacée axialement de ladite piste annulaire associée du disque, d'un jeu (J1) déterminé de fonctionnement ;
- au moins un organe (48) de rappel élastique du patin de freinage (18) vers sa position inactive, qui est interposé entre le patin de freinage (18) et le support (14), l'organe (48) de rappel élastique étant fixé au support (14) par l'intermédiaire de moyens (62) de rattrapage d'un jeu (J2) d'usure de la garniture (24) de friction du patin de freinage (18) qui se déforment plastiquement lorsque la course du patin de freinage (18) jusqu'à sa position active est supérieure audit jeu (J1) déterminé de fonctionnement, et l'organe(48) de rappel élastique comportant une lame (50) comportant au moins un premier tronçon (60) d'orientation axiale qui est déformable élastiquement par traction entre un état de repos et un état d'élongation maximale dont la valeur est égale au jeu (J1) déterminé de fonctionnement,
- cette lame (50) comportant une première extrémité arrière (56) fixe qui est immobilisée en butée axiale vers l'avant sur le support (14), et une deuxième extrémité avant (58) mobile qui est accrochée au patin de freinage (18) pour être poussée par le patin de freinage (18) lors de son coulissement vers sa position active de manière à déformer élastiquement le premier tronçon (60) déformable élastiquement ;
**caractérisé en ce que** la lame (50) comporte au moins un deuxième tronçon (62) déformable plastiquement, sous l'effet d'un effort de traction axiale, formant lesdits moyens de rattrapage du jeu (J2) d'usure, ce deuxième tronçon (62) déformable plastiquement étant conformé pour être allongé plastiquement lorsque la course du patin de freinage (18) jusqu'à sa position active est supérieure audit jeu (J1) déterminé de fonctionnement.

2. Frein à disque selon la revendication précédente, **caractérisé en ce que** l'élasticité du deuxième tronçon (62) déformable plastiquement est inférieure à l'élasticité du premier tronçon (60) déformable élastiquement entre son état de repos et son état d'élongation maximale, la limite d'élasticité d'au moins une portion (66) du deuxième tronçon (62) déformable plastiquement étant inférieure à la limite d'élasticité du premier tronçon (60) déformable élastiquement dans son état d'élongation maximale.

3. Frein à disque (10) selon la revendication précédente, **caractérisé en ce que** le deuxième tronçon (62) déformable plastiquement est formé par un pliage en accordéon d'un tronçon de la lame (50).

4. Frein à disque (10) selon l'une quelconque des revendications précédentes, **caractérisé en ce que** le premier tronçon (60) déformable élastiquement présente une forme incurvée.

5. Frein à disque (10) selon l'une quelconque des revendications précédentes, **caractérisé en ce que** le deuxième tronçon (62) déformable plastiquement est agencé axialement en arrière du premier tronçon (60) déformable élastiquement.

6. Frein à disque selon l'une quelconque des revendications précédentes, **caractérisé en ce que** le deuxième tronçon (62) déformable plastiquement est agencé axialement en arrière du patin de freinage (18).

7. Frein à disque (10) selon la revendication précédente, **caractérisé en ce que** l'extrémité axiale arrière (56) fixe de la lame (50) est portée par des moyens (52) de fixation par insertion axiale dans une encoche (68) axiale du support (14).

8. Frein à disque (10) selon la revendication précédente, **caractérisé en ce que** les moyens de fixation sont formés par une languette (52) qui s'étend parallèlement à la lame (50) de manière à former une épingle à cheveux.

9. Frein à disque (10) selon la revendication 8 **caractérisé en ce que** l'encoche (68) présente une section en forme de queue d'aronde, et **en ce que** la languette (52) comporte une patte (74) d'expansion élastique qui est montée contrainte élastiquement de manière transversale dans l'encoche (68) de manière à immobiliser le coulissement de la languette (52) par frottement.

10. Frein à disque (10) selon l'une des revendications 8 ou 9, **caractérisé en ce que** ledit au moins un patin de freinage (18) comporte au moins une oreille (26) latérale de guidage en coulissement qui est reçue dans une coulisse (28) axiale du support (14), et **en ce que** l'encoche (68) de fixation de la lame (50) est formée dans un fond (30) de la coulisse (28), l'extrémité avant (58) mobile de la lame (50) étant sollicitée par l'oreille latérale (26) associée du patin de freinage (18).

11. Frein à disque (10) selon la revendication 8, **caractérisé en ce que** :
- le patin de freinage (18) comporte au moins une oreille (26) latérale de guidage en coulissement qui est reçue dans une coulisse (28) axiale du support ;
- l'encoche (68) de fixation de la lame (50) est formée par la coulisse (28), l'extrémité avant (58) mobile de la lame (50) étant sollicitée par l'oreille latérale (26) associée du patin de freinage (18) ;
- et **en ce que** les moyens de fixation sont formés par une glissière (32) qui épouse les parois de la coulisse (28) et qui est fixée au support (14).

12. Frein à disque (10) selon l'une quelconque des revendications 7 à 11, **caractérisé en ce que** les moyens de fixation portent une butée (82) qui est en contact avec une face (69) arrière du support (14) pour bloquer le coulissement axial vers l'avant de la lame (50).

13. Frein à disque (10) selon l'une quelconque des revendications 7 à 12, **caractérisé en ce que** la lame (50) et les moyens (52, 32) de fixation sont réalisés en une seule pièce venue de matière, notamment par découpe et pliage d'une tôle.

## Patentansprüche

1. Scheibenbremse (10) eines Automobilfahrzeugs, die Folgendes umfasst:
- eine Bremsscheibe (12), die sich in einer Ebene transversal zu einer Drehachse (A) der Scheibe mit axialer Orientierung erstreckt;
- einen Träger (14), der mit Bezug zu einem Rahmen des Fahrzeugs fest ist;
- wenigstens einen Bremsbelag (18), von denen jeder eine Reibgarnitur (24) umfasst, von der eine transversale Reibfläche (25) mit einer zugeordneten Bremsbahn (22) der Scheibe (12) zusammenwirkt, wobei der Bremsbelag (18) in dem Träger (14) axial verschiebbar montiert ist zwischen einer vorderen aktiven Position, in der die Reibfläche (25) in Anlage gegen die zugeordnete ringförmige Bahn der Scheibe (12) ist, und einer hinteren inaktiven Position, in der die Reibfläche (25) axial von der zugeordneten ringförmigen Bahn der Scheibe um ein bestimmtes Funktionsspiel (J1) beabstandet ist;
- wenigstens ein Organ (48) zur elastischen Rückholung des Bremsbelags (18) in Richtung seiner inaktiven Position, das zwischen dem Bremsbelag (18) und dem Träger (14) eingefügt ist, wobei das elastische Rückholorgan (48) an dem Träger (14) durch Mittel (62) zum Ausgleichen eines Verschleißspiels (J2) der Reibgarnitur (24) des Bremsbelags (18) befestigt ist, die sich plastisch verformen, wenn der Weg des Bremsbelags (18) bis zu seiner aktiven Position größer ist als das bestimmte Funktionsspiel (J1), und wobei das elastische Rückholorgan (48) ein Blatt (50) umfasst, umfassend wenigstens einen ersten Abschnitt (60) mit axialer Orientierung, der durch Zug elastisch verformbar ist zwischen einem Ruhezustand und einem Zustand mit maximaler Verlängerung, deren Wert gleich dem bestimmten Funktionsspiel (J1) ist,
- wobei dieses Blatt (50) ein erstes festes hinteres Ende (56) umfasst, das in einem axialen Anschlag nach vorne an dem Träger (14) immobilisiert ist, und ein zweites bewegliches vorderes Ende (58), das an dem Bremsbelag (18) befestigt ist, um durch den Bremsbelag (18) während seiner Verschiebung in Richtung seiner aktiven Position derart gedrückt zu werden, dass der elastisch verformbare erste Abschnitt (60) elastisch verformt wird;
**dadurch gekennzeichnet, dass** das Blatt (50) wenigstens einen zweiten Abschnitt (62) umfasst, der unter der Einwirkung einer axialen Zugkraft plastisch verformbar ist, der die Mittel zum Ausgleichen des Vergleichsspiels (J2) bildet, wobei dieser zweite plastisch verformbare Abschnitt (62) dazu ausgelegt ist, plastisch verlängert zu werden, wenn der Weg des Bremsbelags (18) bis zu seiner aktiven Position größer ist als das bestimmte Funktionsspiel (J1).

2. Scheibenbremse nach dem vorhergehenden Anspruch, **dadurch gekennzeichnet, dass** die Elastizität des plastisch verformbaren zweiten Abschnitts (62) kleiner ist als die Elastizität des ersten Abschnitts (60), der elastisch zwischen seinem Ruhezustand und seinem Zustand mit maximaler Verlängerung verformbar ist, wobei die Elastizitätsgrenze von wenigstens einem Bereich (66) des zweiten plastisch verformbaren Abschnitts (62) kleiner ist als die Elastizitätsgrenze des ersten elastisch verformbaren Abschnitts (60) in seinem Zustand mit maximaler Verlängerung.

3. Scheibenbremse (10) nach dem vorhergehenden Anspruch, **dadurch gekennzeichnet, dass** der zweite plastisch verformbare Abschnitt (62) durch eine Akkordeonfaltung eines Abschnitts des Blatts (50) gebildet ist.

4. Scheibenbremse (10) nach einem der vorhergehenden Ansprüche, **dadurch gekennzeichnet, dass** der erste elastisch verformbare Abschnitt (60) eine gebogene Form aufweist.

5. Scheibenbremse (10) nach einem der vorhergehenden Ansprüche, **dadurch gekennzeichnet, dass** der zweite plastisch verformbare Abschnitt (62) axial hinter dem ersten elastisch verformbaren Abschnitt (60) angeordnet ist.

6. Scheibenbremse nach einem der vorhergehenden Ansprüche, **dadurch gekennzeichnet, dass** der zweite plastisch verformbare Abschnitt (62) axial hinter dem Bremsbelag (18) angeordnet ist.

7. Scheibenbremse (10) nach dem vorhergehenden Anspruch, **dadurch gekennzeichnet, dass** das feste axiale hintere Ende (56) des Blatts (50) getragen wird durch Mittel (52) zur Befestigung mittels axialem Einsetzen in eine axiale Auskerbung (68) des Trägers (14).

8. Scheibenbremse (10) nach dem vorhergehenden Anspruch, **dadurch gekennzeichnet, dass** die Befestigungsmittel durch eine Zunge (52) gebildet sind, die sich parallel zu dem Blatt (50) derart erstreckt, dass sie eine Haarnadel bildet.

9. Scheibenbremse (10) nach Anspruch 8, **dadurch gekennzeichnet, dass** die Auskerbung (68) einen schwalbenschwanzförmigen Querschnitt aufweist, und dass die Zunge (52) eine elastische Expansionslasche (74) umfasst, die elastisch gespannt in transversaler Weise in der Auskerbung (68) derart montiert ist, dass die Verschiebung der Zunge (52) durch Reibung immobilisiert wird.

10. Scheibenbremse (10) nach einem der Ansprüche 8 oder 9, **dadurch gekennzeichnet, dass** der wenigstens eine Bremsbelag (18) wenigstens ein laterales Ohr (26) zur Schiebeführung umfasst, das in einem axialen Schiebeelement (28) des Trägers (14) aufgenommen ist, und dass die Auskerbung (68) zur Befestigung des Blatts (50) in einem Boden (30) der Schiebeführung (28) gebildet ist, wobei das bewegliche vordere Ende (58) des Blatts (50) durch das zugeordnete laterale Ohr (26) des Bremsbelags (18) beaufschlagt wird.

11. Scheibenbremse (10) nach Anspruch 8, **dadurch gekennzeichnet, dass**:
- der Bremsbelag (19) wenigstens ein laterales Ohr (26) zur Schiebeführung umfasst, das in einem axialen Schiebeelement (28) des Trägers aufgenommen ist;
- die Auskerbung (68) zur Befestigung des Blatts (50) durch das Schiebeelement (28) gebildet ist, wobei das bewegliche vordere Ende (58) des Blatts (50) durch das zugeordnete laterale Ohr (26) des Bremsbelags (18) beaufschlagt wird;
- und dass die Befestigungsmittel durch ein Gleitelement (32) gebildet sind, das sich an die Wände des Schiebeelements (28) anschmiegt, und das an dem Träger (14) befestigt ist.

12. Scheibenbremse (10) nach einem der Ansprüche 7 bis 11, **dadurch gekennzeichnet, dass** die Befestigungsmittel einen Anschlag (82) tragen, der in Kontakt mit einer hinteren Fläche (69) des Trägers (14) ist, um die axiale Verschiebung des Blatts (50) nach vorne zu blockieren.

13. Scheibenbremse (10) nach einem der Ansprüche 7 bis 12, **dadurch gekennzeichnet, dass** das Blatt (50) und die Befestigungsmittel (52, 32) einstückig aus einem Material hergestellt sind, insbesondere durch Schneiden und Falten eines Blechs.

## Claims

1. A motor vehicle disc brake (10) which includes:
- a brake disc (12) which extends in a plane transverse to an axis (A) of axial orientation of the rotation of the disc;
- a support (14) fixed relative to a chassis of the vehicle;
- at least one brake pad (18), each of which includes a friction lining (24) a transverse friction face (25) of which cooperates with an associated brake track (22) of the disc (12), the brake pad (18) being slidably mounted axially in the support (14) between an active front position wherein said friction face (25) is bearing against the associated annular track of the disc (12), and an inactive rear position wherein said friction face (25) is axially spaced from said associated annular track of the disc, by a determined operation clearance (J1);
- at least one member (48) for elastically returning the brake pad (18) to its inactive position, which is interposed between the brake pad (18) and the support (14), the elastic return member (48) being fixed to the support (14) via means (62) for adjusting a clearance (J2) of the wear of the brake pad (18) friction lining (24) which plastically deform when the stroke of the brake pad (18) until its active position is greater than said determined operation clearance (J1), and the elastic return member (48) including a blade (50) including at least one first axial orientation section (60) which is elastically deformable by traction between a rest state and a maximum elongation state, the value of which is equal to the determined operation clearance (J1),
- this blade (50) including a first fixed rear end (56) which is immobilised forward into axial abutment on the support (14), and a second movable front end (58) which is hooked to the brake pad (18) to be pushed by the brake pad (18) during its sliding towards its active position so as to elastically deform the first elastically deformable section (60);
**characterised in that** the blade (50) includes at least one second plastically deformable section (62), under the effect of an axial traction force, forming said wear clearance (J2) adjustment means, this second plastically deformable section (62) being shaped to be plastically elongated when the stroke of the brake pad (18) until its active position is greater than said determined operation clearance (J1).

2. The disc brake according to the preceding claim, **characterised in that** the elasticity of the second plastically deformable section (62) is less than the elasticity of the first elastically deformable section (60) between its rest state and its maximum elongation state, the elasticity limit of at least one portion (66) of the second plastically deformable section (62) being less than the elasticity limit of the first elastically deformable section (60) in its maximum elongation state.

3. The disc brake (10) according to the preceding claim, **characterised in that** the second plastically deformable section (62) is formed by an accordion folding of a section of the blade (50).

4. The disc brake (10) according to any one of the preceding claims, **characterised in that** the first elastically deformable section (60) has a curved shape.

5. The disc brake (10) according to any one of the preceding claims, **characterised in that** the second plastically deformable section (62) is arranged axially behind the first elastically deformable section (60).

6. The disc brake according to any one of the preceding claims, **characterised in that** the second plastically deformable section (62) is arranged axially behind the brake pad (18).

7. The disc brake (10) according to the preceding claim, **characterised in that** the fixed rear axial end (56) of the blade (50) is carried by means (52) for fixing by axial insertion into an axial notch (68) of the support (14).

8. The disc brake (10) according to the preceding claim, **characterised in that** the fixing means are formed by a tab (52) which extends parallel to the blade (50) so as to form a hairpin.

9. The disc brake (10) according to claim 8 **characterised in that** the notch (68) has a dovetail shaped cross-section, and **in that** the tab (52) includes an elastic expansion leg (74) which is mounted elastically constrained in a transverse manner into the notch (68) so as to immobilise the sliding of the tab (52) by friction.

10. The disc brake (10) according to one of claims 8 or 9, **characterised in that** said at least one brake pad (18) includes at least one lateral sliding guide lug (26) which is received in an axial guideway (28) of the support (14), and **in that** the blade (50) fixing notch (68) is formed in a bottom (30) of the guideway (28), the movable front end (58) of the blade (50) being biased by the associated lateral lug (26) of the brake pad (18).

11. The disc brake (10) according to claim 8, **characterised in that**:
- the brake pad (18) includes at least one lateral sliding guide lug (26) which is received in an axial guideway (28) of the support;
- the blade (50) fixing notch (68) is formed by the guideway (28), the movable front end (58) of the blade (50) being biased by the associated lateral lug (26) of the brake pad (18);
- and **in that** the fixing means are formed by a slide (32) which conforms to the walls of the guideway (28) and which is fixed to the support (14).

12. The disc brake (10) according to any one of claims 7 to 11, **characterised in that** the fixing means carry an abutment (82) which is in contact with a rear face (69) of the support (14) to block the axial sliding towards the front of the blade (50).

13. The disc brake (10) according to any one of claims 7 to 12, **characterised in that** the blade (50) and the fixing means (52, 32) are made integrally in one single piece, in particular by cutting and folding a sheet metal.
